# EUROPÄISCHE PATENTSCHRIFT

(11) **EP 0 697 231 B1**
(45) Veröffentlichungstag und Bekanntmachung des Hinweises auf die Patenterteilung: **06.05.1999**
(21) Anmeldenummer: 95250194.8
(22) Anmeldetag: 10.08.1995
(51) Int. Cl.: B01D 1/18, C02F 1/04

(54) **Verfahren zum Aufbereiten und Wiederverwenden von waschaktiven Substanzen aus Waschkonzentraten**
Process for reprocessing and reusing of active washing substances from washing concentrates
Procédé de retraitement et de réutilisation des substances lavantes actives des concentrats lavants

(30) Priorität: 17.08.1994 DE 4430618
(43) Veröffentlichungstag der Anmeldung: 21.02.1996
(73) Patentinhaber: WEROmed Görlitz, Umweltmanagement u. Treuhand GmbH, 02826 Görlitz (DE)
(72) Erfinder: Bauer, Hans-Peter, D-02826 Görlitz (DE); Hörich, Hermann, D-01689 Weinböhla (DE); Külz, Erich, D-02829 Holtendorf (DE); Lange, Rainer, D-02828 Görlitz (DE)
(74) Vertreter: Riemann, Bernd

(56) Entgegenhaltungen:
- DE-A- 4 124 915
- DATABASE WPI Section Ch, Week 8439 Derwent Publications Ltd., London, GB; Class D15, AN 84-240608 & JP-A-59 143 552 ( NAGATA SANGYO KK) , 17.August 1984

## Beschreibung

Die Erfindung betrifft ein Verfahren zum Aufbereiten und Wiederverwenden von waschaktiven Substanzen aus Waschkonzentraten bei der Umkehr-Osmose Abwasserreinigung für Wäschereiabwasser. Diese Erfindung ist anwendbar bei Wäschereien, die im Zusammenwirken mit einer Abfallverbrennungsanlage betrieben werden.

Aus der DE-OS 41 24 915 ist ein Verfahren zum Aufbereiten und Wiederverwenden von vorzugsweise waschaktive Substanzen enthaltendem Waschwasser sowie von Spülwasser bestimmt zum Reinigen von Gegenständen, insbesondere von Fahrzeugen, bekannt. Dieser Lösung liegt das Problem zugrunde, verfahrensmäßige Vereinfachungen zum Aufbereiten und Wiederverwenden von Wasch- und Spülwasser zu erreichen, wobei insbesondere auch eine Reduzierung des Einsatzes der waschaktiven Substanzen erfolgen soll und zudem die Aufsalzung des wiederzuverwendenden bzw. benutzten Wassers reduziert wird.

Dieses Problem wird nach der offenbarten Lehre im wesentlichen dadurch gelöst, daß benutztes Waschwasser und benutztes Spülwasser zusammen als Abwasser einem Behältnis zugeführt werden, daß ein Teil des Abwassers zur Gewinnung zumindest eines Teils des benötigten Waschwassers filtriert wird, wobei im Waschwasser vorhandene waschaktive Substanzen wiederverwendet werden, und daß ein Teil des Abwassers zur Gewinnung eines Teils des benötigten Spülwassers durch eine Flotation aufbereitet wird.

Zur Filtration werden vorzugsweise Mehrschichtfilter eingesetzt, bei denen das Abwasser nacheinander mehrere Schichten unterschiedlicher Körnung durchströmt, die beispielsweise aus gröberem Hydroanthrazit und feinerem Quarzsand bestehen können.

Beim Aufbereiten des Abwassers durch Flotation gelangt vorzugsweise eine Druckentspannungsflotation zum Einsatz.

Es ist allgemein bekannt, daß bei der Umkehrosmose-Abwasserreinigung ein Konzentrat anfällt, welches entsorgt werden muß. Die Entsorgung ist zum einen möglich, indem das Konzentrat als Schlammwasser entsorgt und zum anderen als getrockneter deponiefähiger Reststoff verbracht wird. Im letzteren Fall sind Trockner gemäß dem Stand der Technik im Einsatz, die zur Herstellung des getrockneten deponiefähigen Reststoffes zusätzliche Energie für den Trocknungssprozeß benötigen. Da das Konzentrat aus ca. 90 % Wasser besteht, ist eine Trocknung sehr energieintensiv, so daß die Entsorgung vorwiegend als Schlammwasser erfolgt.

Der Erfindung liegt die Aufgabe zugrunde, ein Verfahren zum Aufbereiten und Wiederverwenden von waschaktiven Substanzen der gattungsgemäßen Art vorzuschlagen, welches einerseits eine Trocknung des Waschkonzentrates durch Nutzung von Abwärme ermöglicht und welches andererseits eine Reduzierung des Waschmittelverbrauches durch Wiederverwenden waschaktiver Substanzen gewährleistet.

Diese Aufgabe wird erfindungsgemäß dadurch gelöst, daß das anfallende Waschkonzentrat in periodischen Abständen zur Trocknung einem Sprühtrockner zugeführt wird und der durch Nutzung von Abwärme getrocknete waschaktive Substanzen enthaltende Wertstoff dem Waschprozeß wieder zugeführt wird.

Bei der Abfallverbrennung liegt verfahrensbedingt ein hohes Wärmepotential vor, welches in Verbindung mit einer abwasserfreien Wäscherei nicht vollständig als Primärenergie genutzt werden kann.

Die für die Trocknung des Waschkonzentrates benötigte Energie wird in periodischen Abständen vorzugsweise im Abfahrprozeß der thermischen Entsorgungsanlage entnommen. Im Abfahrprozeß der Anlage steht nicht benötigte Wärmeenergie in Form von Dampf zur Verfügung, welche durch die gewählte Lösung sinnvoll genutzt werden kann.

Der zur Trocknung des Waschkonzentrates benutzte Sprühtrockner ist vorzugsweise Bestandteil der thermischen Entsorgungsanlage und arbeitet in dieser als Sprühabsorber für die Kühlung der Abgase.

Den im Sprühtrockner gewonnenen waschaktive Substanzen enthaltenden Wertstoff werden weitere Waschmittelbestandteile , wie z.B. Enzyme, nichtionische Tenside, optische Aufheller und anderes mehr hinzugegeben. Mit der Zugabe weiterer Waschmittelbestandteile ergibt der Wertstoff ein verwertbares Waschmittel, welches in der Wäscherei nutzbar ist und zur Einsparung von neuem Waschmittel beiträgt.

Zur Erzielung einer gleichmäßig guten Qualität des wiederverwendbaren Waschmittels werden die Waschmittelbestandteile vorzugsweise vor bzw. in den Sprühtrockner zugegeben.

Ein wesentlicher Vorteil der vorgeschlagenen Lösung besteht in der Senkung der Umweltbelastung, indem auf die Verbringung des Waschkonzentrates auf die Deponie verzichtet wird. Darüber hinaus werden wertvolle sich im Waschkonzentrat befindliche Rohstoffe ohne zusätzlichen Energieeinsatz zurückgewonnen und dem Waschprozeß wieder zugeführt. Weiterhin wird mit dieser Lösung ein Beitrag zum sparsamen Umgang mit Rohstoffen geleistet.

Die Erfindung soll nachstehend an einem Ausführungsbeispiel näher erläutert werden.

Insbesondere für Kommunen ist es angezeigt, komplexe Lösungen für die thermische Entsorgung von gefährlichen Abfällen aus medizinischen Einrichtungen, Apotheken und Altenheimen im Zusammenwirken mit einem umweltfreundlichen Betrieb einer Wäscherei und chemischen Reinigung zu nutzen. Bei der Nutzung eines derartigen Konzeptes steht in Form des für die Abgaskühlung der Verbrennungsanlage konzipierten Sprühabsorbers eine geeignete Vorrichtung zur Verfügung, die verfahrensseitig als Sprühtrockner für die Trocknung des anfallenden Waschkonzentrates der Wäscherei genutzt werden kann. Im Abfahrprozeß der Verbrennungsanlage ist eine vollständige Abnahme der anstehenden Wärmeenergie in Form von Dampf durch die Wäscherei nicht gegeben, so daß sich diese Verfahrensstufe zur Trocknung des Waschkonzentrates, welches zu diesem Zweck in den als Sprühtrockner arbeitenden Sprühabsorber gegeben wird, anbietet. Dabei wird das Konzentrat vorzugsweise über Düsen eingesprüht. Zur Verbesserung der Gebrauchswerteigenschaften des gewonnenen Wertstoffes werden diesem in den Sprühtrockner weitere Waschmittelbestandteile zugegeben. Das auf diese Art und Weise erhaltene neue Produkt kann als vollwertiges Waschmittel, vor allem für Grauwäsche, in der Wäscherei eingesetzt werden. Es trägt damit zur Reduzierung des Waschmittelverbrauches bei und schont darüber hinaus unsere Umwelt, indem das Waschkonzentrat, welches zudem noch wertvolle Rohstoffe enthält, nicht auf eine Deponie verbracht werden muß.

## Patentansprüche

1. Verfahren zum Aufbereiten und Wiederverwenden waschaktiver Substanzen aus Waschkonzentraten bei der Umkehr-Osmose Abwasserreinigung für Wäschereiabwasser, welches im Zusammenwirken mit einer Abfallverbrennungsanlage betrieben wird, **dadurch gekennzeichnet**, daß das anfallende Waschkonzentrat in periodischen Abständen einem Sprühtrockner zugeführt und der durch Nutzung von Abwärme getrocknete waschaktive Substanzen enthaltende Wertstoff dem Waschprozeß wieder zugegeben wird.

2. Verfahren nach Anspruch 1, dadurch gekennzeichnet, daß als periodischer Abstand der Abfahrprozeß der thermischen Entsorgungsanlage gewählt ist.

3. Verfahren nach Anspruch 1 und 2, dadurch gekennzeichnet, daß als Sprühtrockner ein in der thermischen Entsorgungsanlage installierter Sprühabsorber betrieben wird.

4. Verfahren nach zumindest einem der vorhergehenden Ansprüche, dadurch gekennzeichnet, daß dem gewonnenen Wertstoff weitere Waschmittelbestandteile, wie z.B. Enzyme, nichtionische Tenside, optische Aufheller hinzugegeben werden.

5. Verfahren nach Anspruch 4, dadurch gekennzeichnet, daß die weiteren Waschmittelbestandteile vor bzw. in den Sprühtrockner zugegeben werden.

## Claims

1. Method to process and recycle active chemical substances from concentrated laundry detergents, by reverse osmosis of wastewater from the laundry's wastewater, in laundries which work in combination with a thermal waste incinerator, characterized by the resulting wash concentrate being introduced to a spray dryer in periodical intervals, and dried through the use of thermal heat, the resulting active chemicals, as a valuable raw material, are reintroduced to the wash process.

2. Method in claim number 1., characterized by, the periodical intervals being the exhaust of the thermal waste removal system.

3. Method in claim number 1 and 2, characterized by, the spray dryer being a part of the spray absorber in the thermal waste removal system.

4. Method is from at least one of the above claims characterized by, the resulting raw materials further laundry detergent ingredients being added, for example, enzymes, non-ionic tensides, and brightners.

5. Method from claim 4, characterized by, further laundry detergent ingredients being added before or to the spray dryer.

## Revendications

1. Procédé de retraitement et de réutilisation de substances lavantes actives de concentrés lavants pour l'assainissement par osmose inversée des eaux usées de blanchisserie qui fonctionne avec le concours d'une unité d'incinération de déchets, **caractérisé par le fait que** le concentré lavant en formation est amené périodiquement à un séchoir à pulvérisation et que la matière valable contenant des substances lavantes actives séchées en utilisant la chaleur perdue est rajoutée au processus de lavage.

2. Procédé selon la revendication 1, caractérisé par le fait que le processus d'arrêt de l'unité de recyclage thermique est choisi de façon à être périodique.

3. Procédé selon la revendication 1 ou 2, caractérisé par le fait qu'un absorbeur à pulvérisation installé dans l'unité de recyclage thermique est actionné en tant que séchoir à pulvérisation.

4. Procédé selon au moins l'une des revendications précédentes, caractérisé par le fait que d'autres composants détersifs, tels que des enzymes, des dérivés tensioactifs non-ioniques, des agents de blanchiment optiques, sont ajoutés à la matière valable extraite.

5. Procédé selon la revendication 4, caractérisé par le fait que les autres composants détersifs sont ajoutés avant ou bien dans le séchoir à pulvérisation.
